# EUROPÄISCHE PATENTSCHRIFT

(11) **EP 2 536 595 B1**
(45) Veröffentlichungstag und Bekanntmachung des Hinweises auf die Patenterteilung: **10.09.2014**
(21) Anmeldenummer: 11718249.3
(22) Anmeldetag: 18.02.2011
(51) Int. Cl.: B60R 21/203

(54) **LENKRAD MIT GASSACKMODUL**
STEERING WHEEL HAVING AN AIR BAG MODULE
VOLANT DE DIRECTION AVEC MODULE À COUSSIN GONFLABLE DE SÉCURITÉ

(30) Priorität: 18.02.2010 DE 102010008535
(43) Veröffentlichungstag der Anmeldung: 26.12.2012
(73) Patentinhaber: TRW Automotive Safety Systems GmbH, 63743 Aschaffenburg (DE)
(72) Erfinder: SCHÜTZ, Dominik, 63872 Heimbuchenthal (DE)
(74) Vertreter: Mehnert, Bernhard
(86) Internationale Anmeldenummer: PCT/DE2011/000147
(87) Internationale Veröffentlichungsnummer: WO 2011/100960

(56) Entgegenhaltungen:
- EP-A2- 1 043 198
- DE-U1-202006 016 948
- ES-A1- 2 135 999
- US-A1- 2003 197 355
- US-A1- 2009 085 334

## Beschreibung

Die Erfindung betrifft ein Lenkrad, zur Aufnahme eines Gassackmoduls mittels einer lösbaren Rastverbindung, nach dem Oberbegriff von Anspruch 1.

Ein Lenkrad nach dem Oberbegriff des Anspruchs 1 ist aus der ES 2 135 999 bekannt.

Daneben sind weitere Lenkrad-Gassackmodulanordnungen aus der US 2003/0197355 und aus dem deutschen Gebrauchsmuster DE 201 17 140 U1 bekannt. Bei derartigen Baugruppen bzw. Lenkrad-Gassackmodulanordnungen sind das Lenkrad und das Gassackmodul zwei vorgefertigte und separate Bauelemente, die durch eine lösbare Rastverbindung miteinander verbunden sind. An die Verbindung zwischen Lenkrad und Gassackmodul werden hohe Anforderungen hinsichtlich Toleranz bzw. Spaltmaße gestellt, da sich diese im direkten Sicht- und Griffbereich des Fahrers befinden. Darüber hinaus muss die Verbindung zwischen Gassackmodul und Lenkrad sehr hohe Haltekräfte bei einer Auslösung des Gassackmoduls sicherstellen. Gleichzeitig soll die Verbindung zwischen Gassackmodul und Lenkrad für die Montage des Lenkrads im Fahrzeug und Demontage im Werkstattbetrieb auf schnelle und einfache Weise lösbar sein. Hierzu haben sich mittlerweile Rastverbindungen zwischen Gassackmodul und Lenkrad durchgesetzt.

Wenn darüber hinaus das Gassackmodul für eine Hupenbetätigung noch in axialer Richtung auf das Lenkrad hin beweglich sein soll, steigen die konstruktiven Aufwendungen für die lösbare Verbindung zwischen Lenkrad und Gassackmodul erheblich, da die sichtbaren Spaltmaße zwischen Modul und dem geschäumten Lenkrad möglichst klein gehalten sein sollen, aber die Beweglichkeit des Moduls gewährleistet sein muß.

Üblicherweise wird das Modul gegenüber dem Lenkradskelett, das als Metalldruckgußteil, verbreitet aus Magnesium, ausgebildet ist, verrastet, um bei einem Auslösen des Airbags die sichere Verankerung des Moduls am Lenkrad zu gewährleisten. Allerdings kann es vorkommen, dass bei der Umschäumung des Lenkradskelettes Toleranzungenauigkeiten auftreten, die den Spalt zwischen Modul und dem geschäumten Lenkradmantel negativ beeinflussen.

Der Erfindung liegt daher die Aufgabe zugrunde, ein Lenkrad zu schaffen, das den hohen Anforderungen hinsichtlich Positionierung und Führung und den bei Auslösung des Gassackmoduls erforderlichen großen Haltekräften Rechnung trägt.

Für ein Lenkrad der eingangs genannten Art wird diese Aufgabe erfindungsgemäß durch die kennzeichnenden Merkmale von Patentanspruch 1 gelöst.

Indem der Rastzapfen formschlüssig in den geschäumten Lenkradmantel eingebettet ist, erfolgt beim Verrasten des Moduls mit dem Rastzapfen die Ausrichtung des Moduls primär gegenüber dem geschäumten Lenkradmantel, wodurch etwaige Ungenauigkeiten zwischen dem geschäumten Lenkradmantel und dem Lenkradskelett ohne Auswirkung auf den fahrerseitig sichtbaren Spalt zwischen Modul und Lenkradmantel haben. Auch ist der erforderliche Freiraum für die Hupbewegung des Moduls gewährleistet.

Vorzugsweise werden zwei Rastkonzepte miteinander kombiniert, nämlich eine erste Rastverbindung mit hohen Haltekräften und größeren Toleranzen und eine zweite Rastverbindung mit geringeren Haltekräften und deutlich reduzierten Toleranzen. Die Verbindung mit hohen Haltekräften ist in der Regel zwischen Gassackmodul und Lenkradskelett ausgebildet, die Verbindung mit reduzierter Toleranz und höherer Maßhaltigkeit hingegen zwischen Gassackmodul und dem geschäumten Lenkradmantel. Bei letzterer befinden sich am Gassackmodul Rasthaken, die in Hinterschnitte an dem im Lenkradmantel eingeschäumten Rastzapfen eingreifen.

Die Erfindung schafft ferner eine Baugruppe aus einem Lenkrad, einem Gassackmodul und einer lösbaren Rastverbindung, bei der eine toleranzoptimierte Fertigung möglich ist, und bei der die Montagekräfte reduziert sind. Durch die formschlüssige Einbettung des Rastzapfens in den geschäumten Lenkradmantel ist eine sehr genaue Positionierung des Rastzapfens beim Einlegen in das Schäumwerkzeug möglich. Die Einbettung des Rastzapfens in den umschäumten Lenkradmantel hat darüber hinaus den Vorteil, dass bedingt durch die Eigenschaften des Schaums bei der Montage des Gassackmoduls geringe Toleranzen ausgeglichen werden und insgesamt sehr geringe Spaltmaße erreicht werden können.

Eine sehr hohe Festigkeit der Rastverbindung wird dadurch erreicht, dass am Rastzapfen eine Rastkontur ausgebildet ist, die mit einer korrespondierenden Rastkontur am Lenkradskelett zusammenwirkt.

Gemäß der Erfindung kann der Rastzapfen anstelle einer Rastverbindung mit dem Lenkradskelett auch eine andere Art von Verbindung mit Hinterschnitt, z. B. eine Schraubverbindung aufweisen. Hierbei wird der Rastzapfen vorzugsweise mittels eines zentralen oder außermittigen an Lenkradskelett verschraubt, wobei ein Kopfende eines im Querschnitt im wesentlichen T-förmigen Schraubbolzens den Rastzapfen zum Lenkradsekelett hin fixiert oder zumindest eine Bewegung des Rastzapfens in Rechtung weg vom Lenkradskelett verhindert oder auf ein vorbestimmtes Maß begrenzt.

Gemäß einer bevorzugten Ausführungsform kann also der Rastzapfen unbeweglich am Lenkradskelett fixiert sein.

Gemäß einer anderen Ausführungsform kann der Rastzapfen beweglich relativ zum Lenkradskelett angeordnet sein. Hierbei kann die Beweglichkeit auf eine Radialrichtung, also auf eine Richtung senkrecht zur Auflagefäche des Rastzapfens auf dem Lenkradskelett (bzw. senkrecht zur Mittelachse des Rastzapfens oder des ihn haltenden Schraubbolzens) beschränkt sein. Dies ermöglicht eine Einstellbarkeit des Rastzapfens gegenüber dem Lenkradskelett beim Umschäumen.

Durch diese zusätzlich zur formschlüssigen Einbettung wirkende Rast- oder Schraubverbindung können deutlich höhere Kräfte aufgenommen werden, die beispielsweise beim Auslösen des Gassackmoduls auftreten. Bei geeigneter Auslegung der Rastverbindung kann somit auf zusätzliche Fang- bzw. Sicherungshaken oder -bänder für das Halten bzw. Fangen des Moduls bei dessen pyrotechnischer Auslösung verzichtet werden.

Eine besonders gute Führung bei der Montage wird erreicht, wenn der Rastzapfen im wesentlichen zylindrisch ausgebildet ist, und einen Führungsabschnitt aufweist, der mit einer Führungsbüchse am Gassackmodul zusammenwirkt.

Insbesondere wenn das Gassackmodul beweglich - z.B. als Hupenelement - im Lenkrad gelagert werden soll, ist durch eine axiale Vertiefung im Rastzapfen auf eine einfache und vorteilhafte Weise eine Führung einer mit in dem Gassackmodul zusammenwirkenden Druckfeder möglich.

Vorzugsweise betrifft die Erfindung ein Lenkrad bei dem an dem Rastzapfen eine erste Rastkontur ausgebildet ist, die mit einer korrespondierenden zweiten Rastkontur am Gassackmodul zusammenwirkt, wobei vorzugsweise die erste Rastkontur als eine im Wesentlichen tangentiale Vertiefung im Rastzapfen, ausgebildet ist, und/ oder wobei vorzugsweise die die zweite Rastkontur als ein Federelement, insbesondere als Federdraht ausgebildet ist.

Insbesondere ist bevorzugt, dass an dem Rastzapfen eine dritte Rastkontur ausgebildet ist, die mit einer korrespondierenden vierten Rastkontur am Lenkradskelett zusammenwirkt, wobei vorzugsweise die dritte Rastkontur als ein, im Wesentlichen radialer, insbesondere T-förmiger Vorsprung, an einem unteren Ende des Rastzapfens ausgebildet ist, und/ oder wobei vorzugsweise die die vierte Rastkontur als ein, insbesondere hakenförmiger, Absatz an dem Lenkradskelett ausgebildet ist.

Weiterhin ist bevorzugt, dass der Rastzapfen, im wesentlichen zylindrisch ausgebildet ist und/oder zumindest in einem oberen Bereich eine im Wesentlichen zylindrische, als Führung für eine am Gassackmodul vorgesehene Führungsbüchse, ausgebildete Außenkontur aufweist, und/ oder wobei der Rastzapfen in seinem Querschnitt eine im Wesentlichen H-förmige Gestaltung aufweist.

Auch ist bevorzugt, dass der Rastzapfen, einen axialen Führungsabschnitt, insbesondere eine Vertiefung und oder eine Erhöhung zur Aufnahme und Führung einer auf das Gassackmodul einwirkenden Druckfeder aufweist, wobei vorzugsweise der axiale Führungsabschnitt als in einen, insbesondere topfförmigen, Aufnahmeraum des Rastzapfens aufgenommener, separater Einsatz ausgebildet ist.

Eine Ausführungsform ist derart, dass der Rastzapfen, zumindest in axialer Richtung zusätzlich am Lenkradskelett, fixiert ist, wobei die Fixierung vorzugsweise als Verrastung, und/ oder als Verschraubung, ausgebildet ist.

Bevorzugt ist ferner, dass der Rastzapfen, an seinem oberen Ende einen ersten, insbesondere topfförmigen, Aufnahmeraum aufweist, und/ oder dass der Rastzapfen, an seinem unteren Ende einen zweiten, insbesondere umgekehrt topfförmigen, Aufnahmeraum aufweist, in dem ein, vorzugsweise trapezförmiger, insbesondere konischer, Fortsatz des Lenkradskelettes aufgenommen ist, und/ oder dass der Rastzapfen, einen axialen Durchgangskanal aufweist, wobei der der Durchgangskanal insbesondere den ersten und den zweiten Aufnahmeraum, verbindet, und/ oder wobei eine Mittelachse des axialen Durchgangskanals parallel aber beabstandet zu einer Mittelachse des Rastzapfens bzw. einer an diesem ausgebildeten Außenkontur ist.

Vorzugsweise ist das Lenkrad derart ausgebildet, dass zwischen dem Rastzapfen, und dem Lenkradskelett, und/ oder zwischen einem Bolzen, insbesondere zwischen einem in axialen Durchgangskanal und einem ersten und/ oder zweiten Aufnahmeraum, des Rastzapfens aufgenommenen, und fest mit dem Lenkradskelett verbundenen, insbesondere verschraubtem, Bolzen, ein Abstand bzw. kontaktfreier Bereich ausgebildet ist, der vorzugsweise, zumindest teilweise mit einem Schaummaterial des geschäumten Lenkradmantels gefüllt ist.

Vorzugsweise sind zwei, oder drei oder vier Rastzapfen am Lenkrad vorgesehen.

Weiterhin ist Gegenstand der Erfindung ein Gassackmodul, das zur Befestigung an einem Lenkrad mittels einer lösbaren Rastverbindung vorgesehen und ausgebildet ist, wobei das Lenkrad zumindest eines der voranstehend aufgeführten Merkmale aufweist. Das Gassackmodul weist einen Luftsack und einen Gasgenerator sowie zumindest eine Führungsbüchse als Teil der Rastverbindung auf.

Vorzugsweise sind zwei, oder drei oder vier Führungsbüchsen, zur jeweiligen Aufnahme eines Rastzapfens vorgesehen.

Weiterhin ist Gegenstand der Erfindung eine Baugruppe aus einem Lenkrad für ein Kraftfahrzeug, einem Gassackmodul und einer lösbaren Rastverbindung zur Befestigung des Gassackmoduls am Lenkrad, wobei Lenkrad, Gassackmodul und / oder die lösbare Rastverbindung zumindest eines der voranstehend aufgeführten Merkmale aufweisen.

Weitere Merkmale sind Gegenstand der Unteransprüche.

Im Folgenden wird die Erfindung anhand bevorzugter Ausführungsformen mit weiteren Merkmalen und Vorteilen unter Bezugnahme auf die beigefügte Zeichnung näher erläutert. Hierin offenbaren
- Figur 1: eine Draufsicht auf ein erfindungsgemäßes Lenkrad als Teil der erfindungsgemäßen Baugruppe,
- Figur 2: eine perspektivische, teilgeschnittene Teilansicht des Lenkrades und des Gassackmoduls gemäß einer ersten Ausführungsform der Erfindung,
- Figur 3: eine Teilschnittansicht gemäß einer ersten Ausführungsform der Erfindung,
- Figur 4: eine perspektivische Teilansicht des Lenkradskelettes vor dem Umschäumen mit drei darauf verschraubten Rastzapfen gemäß einer zweiten bzw. dritten Ausführungsform der Erfindung,
- Figur 5: eine Teilschnittansicht des Lenkradskelettes vor dem Umschäumen mit darauf fest verschraubtem Rastzapfen gemäß einer zweiten Ausführungsform der Erfindung,
- Figur 6: eine perspektivische, teilgeschnittene Teilansicht des Lenkrades und des Gassackmoduls vor dem Verrasten gemäß einer dritten Ausführungsform der Erfindung, bei der der Rastzapfen auch vom Kopf des Schraubbolzens beabstandet ist und auf dem Lenkradskelett durch dem geschäumten Lenkradmantel positioniert ist,
- Figur 7: eine perspektivische, teilgeschnittene Teilansicht des Lenkrades und des Gassackmoduls nach dem Verrasten gemäß der dritten Ausführungsform der Erfindung.

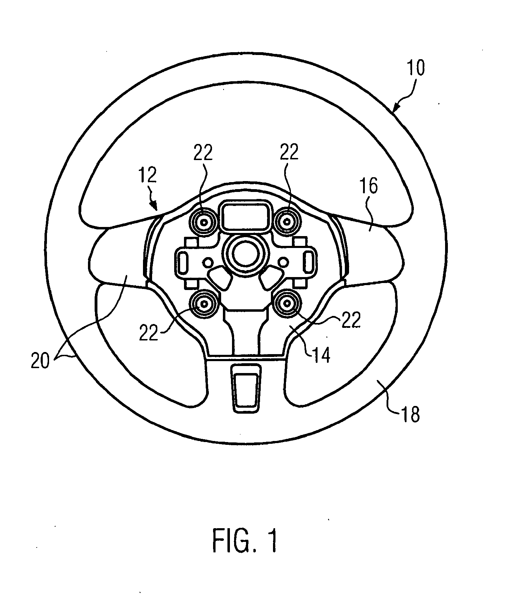

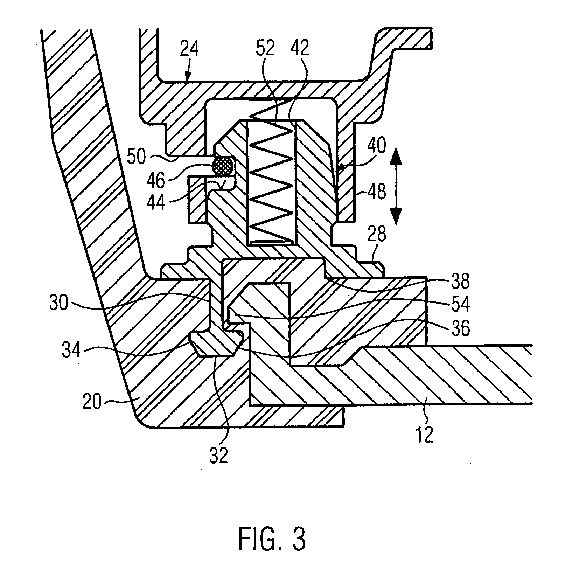

In Figur 1 ist ein Lenkrad 10 dargestellt, das ein metallisches Lenkradskelett 12 mit einer Trägerplatte 14, Lenkradspeichen 16 und einem Lenkradkranz 18 aufweist. Der Lenkradkranz 18, die Lenkradspeichen 16 und Teile der Trägerplatte 14 sind mit einem den Lenkradmantel 20 bildenden Schaumstoff umschäumt. Im Bereich der Trägerplatte 14 sind am Lenkrad vier Rastzapfen 22 angeordnet. Diese vier Rastzapfen dienen zur Führung und Befestigung eines an sich bekannten Gassackmoduls, von dem in hier in Figur 3 nur ein Teil des Gehäuses bzw. Generatorträgers 24 dargestellt ist.

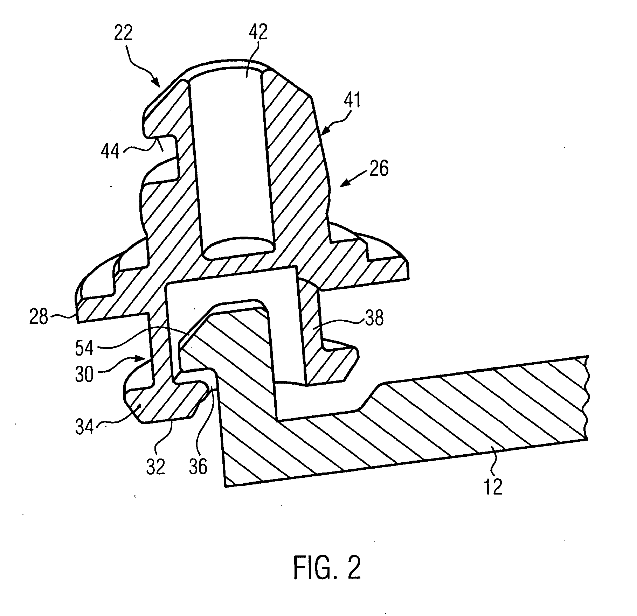

Der in den Figuren 2 und 3 näher dargestellte Rastzapfen 22 hat einen mehrfach abgestuften zylindrischen Körper 26, an dem ein umlaufender Bund 28 ausgebildet ist. Mit diesem umlaufenden Bund 28 liegt der Rastzapfen bündig auf dem im Bereich der Trägerplatte 14 angeordneten Teil des Lenkradmantels 20 auf. Ausgehend von diesem Bund 28 hat der Rastzapfen einen zylindrischen Verankerungsabschnitt 30, der in den Schaum des Lenkradmantels 20 einbettet ist. Das stirnseitige Ende des Verankerungsabschnittes ist mit einer umlaufenden Verdickung 32 versehen, die sowohl außen als auch innen jeweils einen umlaufenden Rand 34 bzw. 36 ausbildet. Der Verankerungsabschnitt 30 hat weiterhin einen von der offenen Stirnseite ausgehenden Einschnitt 38, der sich bis in den Bereich des Bundes 28 erstreckt. Dieser Einschnitt ist so angeordnet, dass er in Richtung Trägerplatte 14 weist. Auf der dem Verankerungsabschnitt 30 gegenüberliegenden Seite des Bundes 28 hat der Rastzapfen einen Führungsabschnitt 40 mit einer balligen Außenkontur. Ausgehend von der Stirnseite ist in diesem Führungsabschnitt eine axiale Vertiefung 42 ausgebildet. An der in Einbaulage des Rastzapfens radial außen gelegenen Seite hat der Führungsabschnitt 40 einen Einschnitt 44, der mit einer am Gassackmodul bzw. dem daran ausgebildeten oder mit diesem verbundenen Generatorträger 24 fixierten Rastfeder 46 zusammenwirkt. In diesem Ausführungsbeispiel mit beweglichem Gassackmodul 24 ist die Höhe des Einschnittes 44 größer als der Durchmesser der Rastfeder 46, sodass eine axiale Beweglichkeit des Gassackmoduls für die Hupenbetätigung möglich ist.

Am Generatorträger 24 sind vier mit den Rastzapfen 22 korrespondierende Führungsbüchsen 48 ausgebildet, die den ballig ausgebildeten Führungsabschnitt des Rastzapfens umgreifen. Radial außenseitig weisen diese Führungsbuchsen jeweils einen Einschnitt 50 auf, durch den sich die Rastfeder 46 in Richtung Rastbolzen bewegen kann.

In den Vertiefungen 42 der Führungsabschnitte 40 ist jeweils eine Druckfeder 52 geführt, die am Boden des Generatorträgers 24 anliegt und diesen in Richtung seiner Grundposition belastet.

Bei der Fertigung des Lenkrades werden das Lenkradskelett 12 und die Rastzapfen in eine Schaumform eingelegt. Beim Schliessen der Form werden die Rastzapfen so positioniert, dass Rasthaken 54 an der Trägerplatte 14 in die Einschnitte 38 der Verankerungsabschnitte 30 ragen und die nach innen weisenden Ränder 36 hintergreifen. Die geschlossene Schaumform wird dann mit an sich bekannten Lenkradschäumen befüllt, so dass der Lenkradmantel ausgebildet wird. Durch die offene Ausbildung der Verankerungsabschnitte und die Einschnitte in diesen kann Schaum während des Schaumvorganges in das Innere der Verankerungsabschnitte fließen und die Rastzapfen sicher im Schaum bzw. im Lenkradmantel zu fixieren. Durch dass Zusammenwirken der Rasthaken 54 an der Trägerplatte 14 und dem als Rastkontur wirkenden inneren Rand 36 der Verankerungsabschnitte wird zusätzlich eine Fixierung der Rastbolzen an der Trägerplatte bzw. dem Lenkradskelett erreicht. Diese Verbindung kann auch die bei Auslösung der Gassackmoduls auftretenden Kräften standhalten und das Modul sicher fixieren.

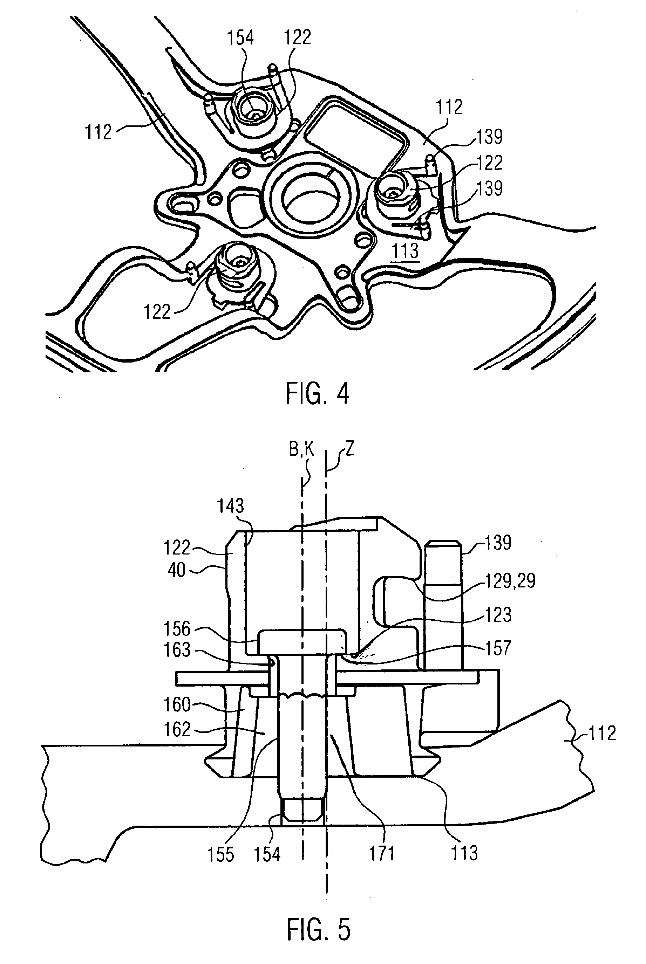

Diese Sicherung der Rastbolzen am Lenkradskelett kann gemäß einer weiteren bevorzugten Ausführungsform, wie sie im Folgenden anhand der Figuren 4 bis 7 beschrieben ist, auch durch einen Verbindungsbolzen, insbesondere durch einen Schraubbolzen 154 erfolgen. Dies kann sowohl von der offenen Stirnseite des Verankerungsabschnittes her als auch von der offenen Stirnseite des Führungsabschnittes her erfolgen. Diese Verbindung kann im Gegensatz zur eng tolerierten Positionierung zum Lenkradmantel mit größeren Toleranzen insbesondere in radialer Richtung erfolgen.

Figur 4 zeigt eine perspektivische Teilansicht eines Lenkradskelettes 112 vor dem Umschäumen mit drei darauf mit je einem Schraubbolzen 154 verschraubten Rastzapfen 122 gemäß einer zweiten bzw. dritten Ausführungsform der Erfindung.

Figur 5 zeigt einen der verschraubtem Rastzapfen des Lenkradskelettes 112 gemäß Figur 4 vor dem Umschäumen gemäß einer zweiten Ausführungsform der Erfindung, bei der ein Auflagebereich 157 des Schraubbolzens 154 auf einem Aufdruckbereich 123 des Rastzapfens 122 drückt, wodurch der Rastzapfen 122 auf dem Lenkradskelett fixiert bzw. fixierbar ist. Der Aufdruckbereich 123 des Rastzapfens 122 ist parallel zu einem Auflagebereich 113 des Lenkradskelettes ausgebildet, auf dem der Rastzapfen in einem vorbestimmten Maß verschiebbar ist, um Toleranzungenauigkeiten beim Einlegen in die Schaumform auszugleichen. Das endgültige Fixieren bzw. Verschrauben des Rastzapfens auf dem Lenkradskelett erfolgt vorzugsweise nach dem Umschäumen.

Um die optimale Positionierung des Rastzapfens auf dem Lenkradskelett zu ermöglichen, weist der Rastzapfen 122 an seinem oberen Ende einen ersten, insbesondere topfförmigen, Aufnahmeraum 143 für den Schraubenkopf 156 auf. Ferner weist der Rastzapfen 122 an seinem unteren Ende einen zweiten, umgekehrt topfförmigen Aufnahmeraum 160 auf, in dem ein, vorzugsweise trapezförmiger, insbesondere konischer, Fortsatz 162 des Lenkradskelettes 112 aufgenommen ist. Denkbar ist jedoch auch eine Ausgestaltung ohne einen solchen zweiten Aufnahmeraum, und/ oder ohne einen solchen Fortsatz 162 des Lenkradskelettes.

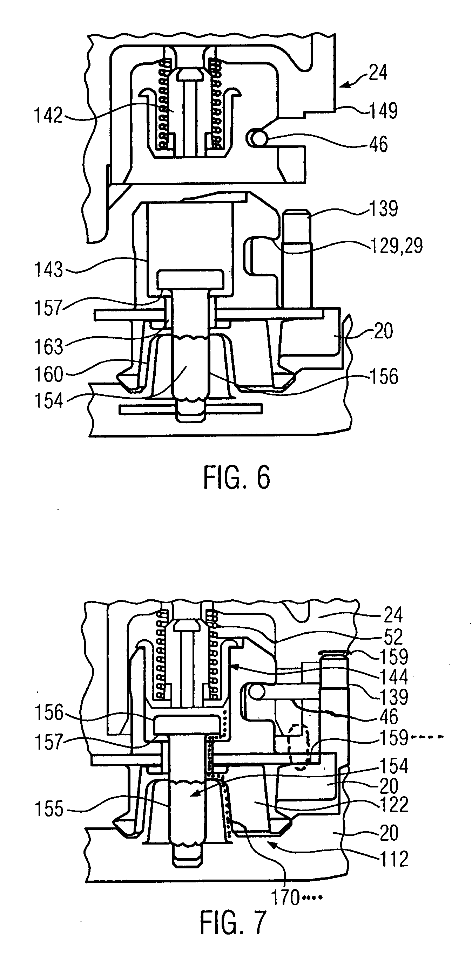

Vorzugsweise weist der Rastzapfen 22, 122, wie in den Figuren 6 und 7 dargestellt, axialen Führungsabschnitt, insbesondere eine Vertiefung 42 (Figur 2) und oder eine Erhöhung 142 zur Aufnahme und Führung einer auf das Gassackmodul einwirkenden Druckfeder 52 auf. Vorzugsweise ist der axiale Führungsabschnitt als in einen, insbesondere topfförmigen, Aufnahmeraum 143 des Rastzapfens 122 aufgenommener, separater Einsatz 144 ausgebildet ist.

Der in den Figuren 4 bis 7 dargestellte Rastzapfen 122 weist ferner einen axialen Durchgangskanal 163 auf, der den ersten und den zweiten Aufnahmeraum 143, 160 oder den ersten Aufnahmeraum 143 mit einer unteren Außenkontur des Rastzapfens 122 verbindet. Hierbei ist der eine Mittelachse K des axialen Durchgangskanals 163 so in dem Rastzapfen angeordnet, dass sie parallel aber beabstandet zu einer Mittelachse Z des Rastzapfens 122 bzw. einer an diesem ausgebildeten Außenkontur 40 ist. Hierdurch kann eine Seite des Rastzapfens, an der ein Rasthaken 29 bzw. Hinterschnitt 129 zur Verrastung mit einem Federlelement 46 der Gassackmoduls 24 ausgebildet ist, mit einer größeren Wandstärke ausgebildet werden, als wenn Außenkontur und Durchgangskanal konzentrisch ausgebildet wären, ebenso wie bei der ersten zuvor beschriebenen Ausführungsform.

Je nach Positionierung des Rastzapfens auf dem Lenkradskelett ist nach dem Einschrauben des Schraubbolzens 154 eine Mittelachse B des in dem Durchgangskanal 163 aufgenommenen Schraubbolzens 154 identisch mit oder parallel aber beabstandet zu der Mittelachse Z des Rastzapfens 122 und/ oder identisch mit oder parallel aber beabstandet zu der Mittelachse B des Durchgangskanales 163.

Bei der hier beschriebenen zweiten Ausführungsform des erfindungsgemäßen Lenkrades ist zwischen dem Rastzapfen 122 und dem Bolzen 154, insbesondere zwischen dem in axialen Durchgangskanal 163 und dem ersten und/ oder zweiten Aufnahmeraum 143, 160 des Rastzapfens 122 aufgenommenen, und fest mit dem Lenkradskelett 112 verschraubtem Bolzen 154 ein kontaktfreier Bereich 170 ausgebildet.

Diese kann zumindest teilweise mit einem Schaummaterial des geschäumten Lenkradmantels 20 gefüllt sein, kann aber auch leer (mit Luft gefüllt) sein.

Der kontaktfreie Bereich 170 erstreckt sich entlang eines Umfangsbereiches 171 eines Schaftes 155 und eines Kopfes 156 des Bolzens 154, um so eine freie Positionierung (im vorbestimmten Rahmen, vorzugsweise im Bereich von bis zu 2 mm) des Rastzapfens gegenüber dem Lenkradskelett zu gestatten.

Gemäß der in Figur 6 und 7 dargestellten, dritten Ausführungsform erstreckt sich der kontaktfreie Bereich 170 zusätzlich zumindest teilweise auf einen zwischen dem Umfangsbereich 171 des Schaftes 155 und des Kopfes 156 des Bolzens 154 gelegenen Auflagebereich 157 des Kopfes 156. Hierdurch ist eine geringe Höhenadaption zusätzlich möglich.

Insbesondere ist der Rastzapfen 122 ausschließlich durch den geschäumten Lenkradmantel 20 auf dem Lenkradskelett 112 fixiert und positioniert.

Dies ist in Figuren 6 und 7 dargestellt, die eine perspektivische, teilgeschnittene Teilansicht des Lenkrades und des Gassackmoduls vor und nach dem Verrasten gemäß der dritten Ausführungsform der Erfindung zeigen. Der Rastzapfen ist auch vom Kopf des Schraubbolzens beabstandet und auf seiner Auflage 113 auf dem Lenkradskelett ausschließlich durch dem geschäumten Lenkradmantel positioniert und gehalten.

Lediglich im Auslösefall des Luftsackes wird der Rastzapfen zusätzlich durch den Kopf 156 des Schraubbolzens 154 am Lenkradskelett gehalten.

In allen Ausführungsformen der Erfindung umschließt der geschäumte Lenkradmantel 20 zumindest teilweise den oder die Rastzapfen 22, 122 und das Lenkradskelett.

Der Rastzapfen aller Ausführungsformen kann, wie lediglich in den Figuren 4 bis 7 dargestellt einen (oder zwei oder mehr) Vorsprung 139 für einen Hupkontakt 149 aufweisen, der in Zusammenwirkung mit dem Gassackmodul 24 beim Niederdrücken desselben den Hupkontakt schließt oder öffnet. Weiterhin können ein zweiter Vorsprung oder zweite Vorsprünge am Rastzapfen und/ oder am Gassackmodul vorgesehen sein, die dem Weg des Niederdrückens auf ein zulässiges Maß beschränken. Derartige Vorsprünge sind vorzugsweise einstückig mit dem Rastzapfen ausgebildet. Derartige Vorsprünge und des Rastzapfen erstrecken sich vorzugsweise von einer gemeinsamen Basisplatte, die auf einer Auflagefläche 113 auf dem Lenkradskelett aufliegt. Insbesondere ist der Rastzapfen (vorzugsweise mit Basisplatte und/ oder Vorsprüngen) als Spritzgußteil aus einem Kunststoffmaterial ausgeführt.

## Patentansprüche

1. Lenkrad, zur Aufnahme eines Gassackmoduls (24) mittels einer lösbaren Rastverbindung, wobei das Lenkrad (10) ein Lenkradskelett (12, 112) und einen geschäumten Lenkradmantel (20) aufweist, wobei ein Rastzapfen (22, 122) als Teil der Rastverbindung vorgesehen ist, der formschlüssig in den geschäumten Lenkradmantel (20) eingebettet ist und an dem eine erste Rastkontur (44) ausgebildet ist, die mit einer korrespondierenden zweiten Rastkontur (46) am Gassackmodul (24) zusammenwirkt, **dadurch gekennzeichnet, dass** der Rastzapfen (22, 122) zur Aufnahme der beim Auslösen des Gassackmoduls auftretenden Kräfte zumindest in axialer Richtung zusätzlich am Lenkradskelett (12, 112) fixiert ist, wobei die Fixierung als Verrastung (36, 54) und/ oder als Verschraubung (154, 156) ausgebildet ist.

2. Lenkrad nach Anspruch 1, **dadurch gekennzeichnet, dass** die erste Rastkontur (44) als eine im Wesentlichen tangentiale Vertiefung (44) im Rastzapfen (22, 122) ausgebildet ist, und/ oder wobei vorzugsweise die die zweite Rastkontur als ein Federelement, insbesondere als Federdraht (46) ausgebildet ist.

3. Lenkrad nach Anspruch 1 oder 2, **dadurch gekennzeichnet, dass** an dem Rastzapfen (22) eine dritte Rastkontur (36) ausgebildet ist, die mit einer korrespondierenden vierten Rastkontur (54) am Lenkradskelett (12) zusammenwirkt, wobei vorzugsweise die dritte Rastkontur (44) als ein, im Wesentlichen radialer, insbesondere T-förmiger Vorsprung (30, 36) an einem unteren Ende des Rastzapfens (22) ausgebildet ist, und/ oder wobei vorzugsweise die die vierte Rastkontur als ein, insbesondere hakenförmiger, Absatz (54) an dem Lenkradskelett (12) ausgebildet ist..

4. Lenkrad nach zumindest einem der voranstehenden Ansprüche, **dadurch gekennzeichnet, dass** der Rastzapfen (22, 122) im wesentlichen zylindrisch ausgebildet ist und/oder zumindest in einem oberen Bereich eine im Wesentlichen zylindrische, als Führung für eine am Gassackmodul (24) vorgesehene Führungsbüchse (48), ausgebildete Außenkontur (40) aufweist, und/ oder wobei der Rastzapfen (122) in seinem Querschnitt eine im Wesentlichen H-förmige Gestaltung aufweist.

5. Lenkrad nach einem der voranstehenden Ansprüche, **dadurch gekennzeichnet, dass** der Rastzapfen (22, 122) einen axialen Führungsabschnitt, insbesondere eine Vertiefung (42) und oder eine Erhöhung (142) zur Aufnahme und Führung einer auf das Gassackmodul einwirkenden Druckfeder (52) aufweist, wobei vorzugsweise der axiale Führungsabschnitt als in einen, insbesondere topfförmigen, Aufnahmeraum (143) des Rastzapfens (122) aufgenommener, separater Einsatz (144) ausgebildet ist.

6. Lenkrad nach einem der voranstehenden Ansprüche, **dadurch gekennzeichnet, dass** zwischen dem Rastzapfen (22, 122) und dem Lenkradskelett (12, 112) und/ oder zwischen einem fest mit dem Lenkradskelett (112) verbundenen Bolzen (154) ein kontaktfreier Bereich (170) ausgebildet ist, der zumindest teilweise mit einem Schaummaterial des geschäumten Lenkradmantels (20) gefüllt ist.

7. Lenkrad nach einem der voranstehenden Ansprüche, **dadurch gekennzeichnet, dass** der Rastzapfen (22, 122) an seinem oberen Ende einen ersten, insbesondere topfförmigen, Aufnahmeraum (143) aufweist, und/ oder dass der Rastzapfen (22, 122) an seinem unteren Ende einen zweiten, insbesondere umgekehrt topfförmigen, Aufnahmeraum (160) aufweist, in dem ein, vorzugsweise trapezförmiger, insbesondere konischer, Fortsatz (162) des Lenkradskelettes (112) aufgenommen ist, und/ oder dass dass der Rastzapfen (22, 122) einen axialen Durchgangskanal (163) aufweist, wobei der der Durchgangskanal (163) insbesondere den ersten und den zweiten Aufnahmeraum (143, 160) oder den ersten Aufnahmeraum (143) mit einer unteren Außenkontur des Rastzapfens (22, 122) verbindet, und/ oder wobei eine Mittelachse (K) des axialen Durchgangskanals (163) parallel aber beabstandet zu einer Mittelachse (Z) des Rastzapfens (122) bzw. einer an diesem ausgebildeten Außenkontur (40) ist, und/ oder wobei eine Mittelachse (B) eines in dem Durchgangskanal (163) aufgenommenen Schraubbolzens (154) identisch mit oder parallel aber beabstandet zu einer Mittelachse (Z) des Rastzapfens (122) und/ oder identisch mit oder parallel aber beabstandet zu einer Mittelachse (B) des Durchgangskanal (163) ist.

8. Lenkrad nach einem der voranstehenden Ansprüche, **dadurch gekennzeichnet, dass** zwischen dem Rastzapfen (22, 122) und dem Lenkradskelett (12, 112) und/ oder zwischen einem Bolzen (154), insbesondere zwischen einem in axialen Durchgangskanal (163) und einem ersten und/ oder zweiten Aufnahmeraum (143, 160) des Rastzapfens (122) aufgenommenen, und fest mit dem Lenkradskelett (112) verbundenen, insbesondere verschraubtem, Bolzen (154), ein kontaktfreier Bereich (170) ausgebildet ist, der vorzugsweise, zumindest teilweise mit einem Schaummaterial des geschäumten Lenkradmantels (20) gefüllt ist, wobei der kontaktfreie Bereich (170) vorzugsweise ein Umfangsbereich (171) eines Schaftes (155) und/ oder eines Kopfes (156) des Bolzens (154) ist, und wobei sich der kontaktfreie Bereich (170) vorzugsweise zusätzlich zumindest teilweise auf einen zwischen dem Umfangsbereich (171) des Schaftes (155) und des Kopfes (156) des Bolzens (154) gelegenen Auflagebereich (157) des Konfes (156) erstreckt.

9. Baugruppe mit einem Lenkrad und einem Gassackmodul, zur Befestigung an dem Lenkrad (10) mittels einer lösbaren Rastverbindung, wobei das Lenkrad (10) zumindest nach einem der voranstehenden Ansprüche ausgebildet ist, und wobei das Gassackmodul (24) einen Luftsack und einen Gasgenerator sowie zumindest eine Führungsbüchse (48) als Teil der Rastverbindung, vorzugsweise zwei, oder drei oder vier Führungsbüchsen (48), zur jeweiligen Aufnahme eines Rastzapfens (22, 122) aufweist.

## Claims

1. A steering wheel for accommodating an airbag module (24) by means of a detachable click-stop connection, wherein the steering wheel (10) includes a steering wheel armature (12, 112) and a foamed steering wheel shell (20), wherein a latch pin (22, 122) is provided as part of the click-stop connection, which latch pin is positively embedded in the foamed steering wheel shell (20) and at which latch pin a first latch contour (44) interacting with a corresponding second latch contour (46) at the airbag module (24) is configured, **characterized in that** the latch pin (22, 122) is additionally fixed at the steering wheel armature (12, 122) for taking up the forces occurring upon release of the airbag module at least in the axial direction, wherein the fixing configured as latching engagement (36, 54) and/or as screwed connection (154, 156).

2. The steering wheel according to claim 1, **characterized in that** the first latch contour (44) is configured as a substantially tangential recess (44) in the latch pin (22, 122), and/or wherein preferably the second latch contour is configured as spring element, especially as spring wire (46).

3. The steering wheel according to claim 1 or 2, **characterized in that** at the latch pin (22) a third latch contour (36) is configured which interacts with a corresponding fourth latch contour (54) at the steering wheel armature (12), wherein preferably the third latch contour (44) is configured as a substantially radial, especially T-shaped projection (30, 36) at a lower end of the latch pin (22), and/or wherein preferably the fourth latch contour is configured as an especially hook-shaped shoulder (54) at the steering wheel armature (12).

4. The steering wheel according to at least one of the preceding claims, **characterized in that** the latch pin (22, 122) is formed substantially cylindrically and/or includes at least in an upper area a substantially cylindrical outer contour (40) in the form of a guide for a guide bushing (48) provided at the airbag module (24), and/or wherein the latch pin (122) exhibits a substantially H-shaped configuration in its cross-section.

5. The steering wheel according to any one of the preceding claims, **characterized in that** the latch pin (22, 122) includes an axial guiding portion, especially a recess (42) and/or an elevation (142) for accommodating and guiding a compression spring (52) acting on the airbag module, wherein preferably the axial guiding portion is in the form of a separate insert (144) received in an especially cup-shaped receiving space (143) of the latch pin (122).

6. The steering wheel according to any one of the preceding claims, **characterized in that** between the latch pin (22, 122) and the steering wheel armature (12, 112) and/or between a stud (154) fixedly connected to the steering wheel armature (112) a contact-free area (170) is formed which is at least partly filled with foam material of the foamed steering wheel shell (20).

7. The steering wheel according to any one of the preceding claims, **characterized in that** the latch pin (22, 122) includes at its upper end a first, especially cup-shaped receiving space (143), and/or **in that** the latch pin (22, 122) includes at its lower end a second, especially inversely cup-shaped receiving space (160) in which a preferably trapezoidal, especially conical, extension (162) of the steering wheel armature (112) is received, and/or **in that** the latch pin (22, 122) includes an axial through-passage (163), wherein the through-passage (163) communicates especially the first and second receiving spaces (143, 160) or the first receiving space (143) with a lower outer contour of the latch pin (22, 122), and/or wherein a central axis (K) of the axial through-passage (163) is parallel to but spaced apart from a central axis (Z) of the latch pin (122) and, respectively, an outer contour (40) formed at the latter, and/or wherein a central axis (B) of a stud bolt (154) received in the through-passage (163) is identical or parallel to but spaced apart from a central axis (Z) of the latch pin (122) and/or identical or parallel to but spaced apart from a central axis (B) of the through-passage (163).

8. The steering wheel according to any one of the preceding claims, **characterized in that** between the latch pin (22, 122) and the steering wheel armature (12, 122) and/or between a stud (154), especially between a stud (154) received in the axial through-passage (163) and a first and/or second receiving space (143, 160) of the latch pin (122) and fixedly connected, especially screwed to the steering wheel armature (112), a contact-free area (170) is formed which is preferably at least partly filled with foam material of the foamed steering wheel shell (20), wherein the contact-free area (170) preferably is a circumferential area (171) of a shank (155) and/or a head (156) of the stud (154), and wherein the contact-free area (170) preferably extends additionally at least partly to a bearing zone (157) of the head (156) located between the circumferential area (171) of the shank (155) and the head (156) of the stud (154).

9. A sub-assembly comprising a steering wheel and an airbag module for fastening to the steering wheel (10) by means of a detachable click-stop connection, wherein the steering wheel (10) is configured at least according to any one of the preceding claims and wherein the airbag module (24) includes an airbag and an inflator as well as at least one guide bushing (48) as part of the click-stop connection, preferably two or three or four guide bushings (48), for receiving a respective latch pin (22, 122).

## Revendications

1. Volant de direction, destiné à recevoir un module airbag (24) au moyen d'une liaison par encliquetage démontable, pour lequel le volant de direction (10) comprend une ossature de volant de direction (12, 112) et un couvre-volant de direction en mousse (20), pour lequel est prévue une broche de verrouillage (22, 122) comme partie de la liaison par encliquetage, qui est intégrée formée dans le couvre-volant de direction en mousse (20) et sur lequel est formé un premier contour de verrouillage (44), qui se combine avec un second contour d'encliquetage correspondant (46) sur le module airbag (24), **caractérisé en ce que** la broche de verrouillage (22, 122) est fixée en plus à l'ossature du volant de direction (12, 112) pour recevoir les forces dues à l'activation du module airbag au moins dans la direction axiale, pour lequel la fixation est réalisée par encliquetage (36, 54) et/ou par vissage (154, 156).

2. Volant de direction selon la revendication 1, **caractérisé en ce que**, le premier contour de verrouillage (44) est formé essentiellement par un évidement (44) tangentiel dans la broche de verrouillage, et/ou pour lequel le second contour d'encliquetage est formé de préférence par un élément ressort, en particulier un fil de ressort.

3. Volant de direction selon la revendication 1 ou 2, **caractérisé en ce que**, est formé sur la broche de verrouillage (22) un troisième contour de verrouillage (36), qui se combine avec un quatrième contour de verrouillage (54) correspondant se trouvant sur l'ossature du volant de direction (12), pour lequel le troisième contour de verrouillage (44) est formé de préférence par une partie saillante (30, 36), essentiellement radiale, en particulier en forme de T à une extrémité inférieure de la broche de verrouillage (22), et/ou pour lequel le quatrième contour de verrouillage est formé de préférence par une excroissance (54) en forme de crochet sur l'ossature du volant (12).

4. Volant de direction selon l'une des revendications précédentes, **caractérisé en ce que**, la broche de verrouillage (22, 122) est essentiellement de forme cylindrique et/ou possède au moins une partie supérieure principalement de forme cylindrique, comportant un guide pour une douille de guidage (48) prévue sur le module airbag (24), intégrée au contour extérieur (40), et/ou pour lequel la broche de verrouillage (122) possède une configuration sensiblement en forme de H dans sa coupe transversale.

5. Volant de direction selon l'une des revendications précédentes, **caractérisé en ce que**, la broche de verrouillage (22, 122) possède une partie de guidage axial, en particulier un évidement (42) et/ou une excroissance (142) pour recevoir et guider un ressort (52) comprimé par la force agissant sur le module airbag, pour lequel la portion axiale de guidage est formée par un insert indépendant (144), en particulier en forme de pot, inclus dans le réceptacle (143) de la broche de verrouillage (122).

6. Volant de direction selon l'une des revendications précédentes, **caractérisé en ce que**, est formée une zone sans contact (170), qui est au moins partiellement remplie d'un matériau en mousse du couvre-volant de direction en mousse (20), entre la broche de verrouillage (22, 122) et l'ossature du volant (12, 112) et/ou avec l'ossature du volant de direction (112) fixée par des boulons (154) .

7. Volant de direction selon l'une des revendications précédentes, **caractérisé en ce que**, la broche de verrouillage (22, 122) possède à son extrémité supérieure un premier réceptacle (143), en particulier en forme de pot, et/ou la broche de verrouillage (22, 122) possède à son extrémité inférieure un deuxième réceptacle (160), en particulier en forme de pot inversé, dans lequel est ajoutée une extension (162), de préférence de forme trapézoïdale, en particulier de forme conique, à l'ossature du volant de direction (112), et/ou la broche de verrouillage (22, 122) possède un canal de passage (163), pour lequel le canal de passage (163) relie avec un contour extérieur inférieur de la broche de verrouillage (22, 122), en particulier le premier et le deuxième réceptacle (143, 160) ou le premier réceptacle (143) et/ou pour lequel un axe central (K) du canal de passage axial (163) est parallèle mais espacé d'un axe central (Z) de la broche de verrouillage (122) respectivement formé à l'un de ce contour extérieur (40), et/ou pour lequel un axe central (B) d'une vis de serrage (154) dans le canal de passage (163) est identique avec ou parallèle mais espacé d'un axe central (Z) de la broche de verrouillage (122) et/ou identique avec ou parallèle mais espacé d'un axe central (B) du canal de passage (163).

8. Volant de direction selon l'une des revendications précédentes, **caractérisé en ce que**, est formée une zone sans contact (170) prise entre la broche de verrouillage (22, 122) et l'ossature du volant (12, 112) et /ou entre un boulon (154), en particulier entre un se trouvant dans le canal de passage axial (163) et un premier et/ou deuxième réceptacle (143, 160) de la broche de verrouillage (122), et reliée de manière fixe avec l'ossature du volant de direction (112), en particulier par boulon vissé (154), ladite zone sans contact (170) qui est remplie de préférence au moins partiellement avec un matériau mousse du couvre-volant de direction (20), pour lequel la zone sans contact (170) est de préférence une région périphérique (171) d'un axe (155) et / ou d'une tête (156) du boulon (154), et pour lequel la zone sans contact (170) s'étend de préférence également au moins partiellement entre une zone d'appui (157) de la tête (156) située dans une plage entre la partie périphérique (171) de l'axe (155) et la tête (156) du boulon (154).

9. Ensemble avec un volant de direction et un module airbag, pour fixation au volant de direction (10) au moyen d'une liaison de verrouillage libérable, pour lequel le volant de direction (10) est formé au moins selon l'une des revendications précédentes, et pour lequel le module airbag (24) possède un sac et un générateur de gaz ainsi qu'une douille de guidage (48) en tant que part de la liaison de verrouillage, avec de préférence deux ou trois ou quatre douilles de guidage (48) pour recevoir respectivement une broche de verrouillage (22, 122).
